(19) **Europäisches Patentamt European Patent Office Office européen des brevets**

(11) **EP 1 762 915 B1**

(12) **FASCICULE DE BREVET EUROPEEN**

(45) Date de publication et mention
de la délivrance du brevet:
**03.12.2008 Bulletin 2008/49**

(51) Int Cl.:
***G04G 1/04*** *(2006.01)* *G01C 5/06* *(2006.01)*

(21) Numéro de dépôt: **05108410.1**

(22) Date de dépôt: **13.09.2005**

(54) **Montre altimètre**

Höhenmessuhr

Altimeter watch

(84) Etats contractants désignés:
**CH DE FI FR GB LI**

(43) Date de publication de la demande:
**14.03.2007 Bulletin 2007/11**

(73) Titulaire: **ETA SA Manufacture Horlogère Suisse**
**2540 Grenchen (CH)**

(72) Inventeurs:
• **Blondeau, Fabien**
**2525, Le Landeron (CH)**
• **Talbot, Loïc**
**2560, Nidau (CH)**

• **Giauque, Claude-Alain**
**2515, Prêles (CH)**

(74) Mandataire: **Vigand, Philippe et al**
**ICB,**
**Ingénieurs Conseils en Brevets SA,**
**Rue des Sors 7**
**2074 Marin (CH)**

(56) Documents cités:
**EP-A- 1 061 334 EP-A- 1 180 663**
**US-A- 4 835 716 US-A- 5 671 162**

**Description**

DOMAINE TECHNIQUE

La présente invention concerne, de manière générale, une montre électronique ayant une fonction altimètre. L'invention concerne plus particulièrement une montre comprenant un capteur de pression pour mesurer la pression extérieure, un module altimètre pour calculer des valeurs d'altitude en fonction des valeurs de pression mesurées et des moyens analogiques d'affichage des valeurs d'altitude calculées.

ARRIERE-PLAN TECHNOLOGIQUE

Il connu dans l'art antérieur, en particulier du document EP 1 396 766 A1, une montre électronique de plongée à affichage analogique dans lequel les aiguilles d'affichage de l'heure courante sont aussi utilisées pour afficher des données relatives à la plongée et en particulier la profondeur instantanée du plongeur. La montre comprend à cet effet un capteur de pression permettant de mesurer la pression extérieure ambiante, un module profondimètre permettant de calculer la profondeur du plongeur en fonction des mesures de pression effectuées et d'afficher à l'aide d'une des aiguilles de la montre la profondeur calculée.

De la même manière, il est envisageable de remplacer le module profondimètre par un module permettant de calculer une valeur d'altitude sur la base des mesures de pression effectuées et d'afficher cette altitude calculée par des moyens analogiques de la montre. Une telle montre est décrite, par exemple, dans la demande de brevet européen EP 1 571 507.

Toutefois, une telle montre altimètre présente certains inconvénients suivant l'utilisation qui en est faite. En effet, typiquement lors d'une activité de natation, le porteur de la montre est régulièrement amené à entrer puis sortir le bras hors de l'eau. Ainsi, dans les cas où le mode altimètre est actif, les valeurs de pression mesurées par le capteur varient fortement à chaque changement de milieu entre air et eau. Sachant que la variation de pression observée lorsque l'on s'enfonce de 10 centimètres sous l'eau correspond à environ une variation d'altitude de 100 mètres dans l'air, une telle activité de natation pour laquelle le bras du nageur s'enfonce de quelques dizaines de centimètres à chaque mouvement, a pour conséquence de faire varier l'indication d'altitude de plusieurs centaines de mètres à chacun de ces mouvements. Les moyens analogiques d'affichage, bien qu'esthétiques et très lisibles pour le porteur de la montre en règle générale, présentent dans ce cas l'inconvénient de devoir suivre les variations importantes d'altitude ce qui se traduit par des mouvements importants de ces moyens indicateurs, comme par exemple une aiguille, entre une première position correspondant à l'altitude réelle à la surface de l'eau et une deuxième position correspondant à une altitude erronée beaucoup plus basse lorsque le nageur a le bras sous l'eau. Si l'on prend l'exemple d'un nageur nageant dans un lac d'altitude situé à environ 400 mètres d'altitude et un mouvement de natation amenant périodiquement le bras du nageur à une profondeur de 40 centimètres sous l'eau, alors l'indicateur analogique de l'altitude va se déplacer sans cesse entre les graduations indiquant 400 mètres (i.e. bras à la surface) et 0 mètre (i.e. bras sous l'eau). Un tel fonctionnement du mode altimètre ne peut être toléré. En effet, d'une part, l'utilisateur peut être amené à douter du bon fonctionnement de sa montre au vu des importants mouvements des moyens analogiques d'affichage de l'altitude dans le mode altimètre et, d'autre part, ces moyens analogiques d'affichage étant commandés par un moteur, leur déplacement saccadé entraîne une surconsommation d'énergie qui n'est jamais souhaitable dans un tel instrument portable.

RESUME DE L'INVENTION

L'un des buts principaux de la présente invention est de pallier aux inconvénients susmentionnés en mettant en oeuvre une méthode pour sortir automatiquement du mode altimètre lors d'un usage inadapté de ce mode. L'invention concerne également une montre électronique altimètre agencée pour la mise en oeuvre de cette méthode.

A cet effet, selon un premier aspect, la présente invention concerne donc une méthode telle que définie dans la revendication 1.

Selon une mise en oeuvre préférée de cette méthode, les mesures de valeurs de pression et calculs de valeurs d'altitude des étapes b) et c) sont répétés à une fréquence d'échantillonnage déterminée, l'étape d) consiste dans les deux sous étapes suivantes:

    d1) comparer la différence entre une valeur d'altitude calculée précédemment à l'avant-dernière valeur d'altitude et cette dernière avec un seuil de variation d'altitude déterminé; et

    d2) comparer la différence entre cette même valeur d'altitude calculée précédemment à l'avant dernière valeur d'altitude calculée et la dernière valeur d'altitude calculée avec le même seuil de variation d'altitude déterminé;

et l'étape e) consiste à sortir automatiquement du mode altimètre lorsque le résultat des deux différences effectuées d1) et d2) est supérieur au seuil déterminé de variation d'altitude et arrêter l'affichage des valeurs d'altitude par les moyens analogiques d'affichage.

Il est également possible d'utiliser un filtre de pression de sorte que le calcul de chaque valeur d'altitude est basé sur au moins deux valeurs de pression précédemment mesurées.

Selon un deuxième aspect, la présente invention concerne aussi une montre électronique altimètre telle que définie dans la revendication 9.

Avantageusement, il est prévu que le module altimètre comprenne en outre un filtre de pression ou, respectivement d'altitude, fournissant des valeurs de pression ou, respectivement d'altitude, moyennées au détecteur de variations.

BREVE DESCRIPTION DES FIGURES

D'autres caractéristiques et avantages de la présente invention apparaîtront plus clairement à la lecture de la description détaillée qui suit de modes de réalisation de l'invention donnés uniquement à titre d'exemple non limitatif et illustrés par les dessins annexés où :

- la figure 1 est une vue de face de la montre altimètre selon un mode de réalisation préféré de l'invention;
- la figure 2 représente un diagramme d'état de l'actionnement des modes horaire et altimètre au moyen du ou des organes de commande de la montre
- la figure 3 est un schéma bloc d'un circuit électronique de la montre;
- la figure 4 est un diagramme représentant les étapes d'une première méthode de sortie du mode altimètre;
- les figures 5a-5d représentent un premier exemple de sortie du mode altimètre selon une deuxième méthode préférée de sortie du mode altimètre;
- les figures 6a-6c représentent un deuxième exemple de sortie du mode altimètre selon la deuxième méthode préférée de sortie du mode altimètre.

DESCRIPTION DETAILLEE DE L'INVENTION

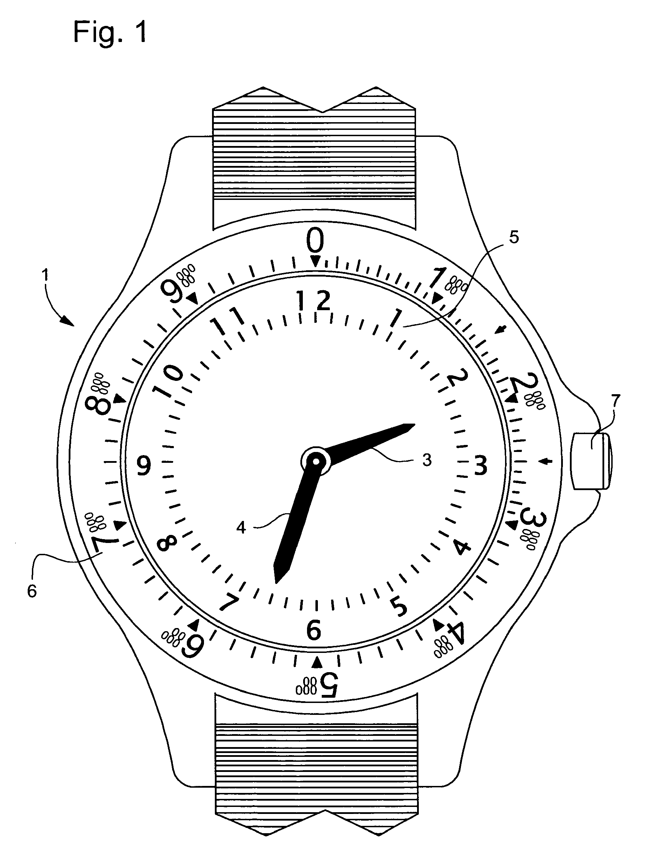

La description qui va suivre est fournie uniquement à titre d'exemple. La figure 1 représente une vue de face d'une montre altimètre 1 utilisée dans son mode altimètre selon un mode de réalisation de l'invention. Comme cela est visible sur cette figure, le cadran 2 de la montre comprend des moyens analogiques d'affichage, formés par exemple d'une aiguille des heures 3 et d'une aiguille des minutes 4 permettant de fournir dans le mode horaire de la montre une indication horaire en pointant en regard de la graduation interne 5 du cadran. La montre comprend en outre une deuxième graduation 6 disposée sur la lunette de la montre. Cette graduation utilisée dans le mode altimètre (représenté ici) comporte des indications d'altitude allant de 0 à 9990 mètres. L'affichage est prévu de préférence de la manière suivante. Lorsque l'altitude à afficher est inférieure à 1000 mètres, les deux aiguilles sont alors superposées et placées en regard de la graduation correspondant à cette altitude. Lorsque l'altitude est supérieure ou égale à 1000 mètres, comme dans l'exemple représenté où l'altitude à afficher est de 2550 mètres, l'une des aiguilles, par exemple l'aiguille 3 des heures, est placée en regard de la graduation numérique 2000 mètres et l'autre aiguille, ici l'aiguille 4 des minutes, est placée en regard de la graduation correspondant au reste de l'altitude, soit 550 mètres. Cette technique d'affichage différente selon que l'altitude soit inférieure à 1000 mètres, ou au contraire supérieure à 1000 mètres présente l'avantage d'être très lisible et claire pour l'utilisateur qu'elle que soit l'altitude à afficher et ce sur une plage importante d'altitude (0 à 9900). On notera que le risque de confusion pouvant apparaître entre l'indication d'une altitude de 100, 200, 300 mètres et une altitude 1100, 2200, 3300 mètres est faible dans la mesure où l'utilisateur est conscient s'il est proche du niveau de la mer (100, 200, 300 ...) ou en montagne (1100, 2200, 3300 ...). Bien entendu, le rôle des deux aiguilles peut être inversé, même s'il est préférable que l'indication fournie par l'aiguille des heures soit plus grande que celle fournie par l'aiguille des minutes comme c'est le cas lorsqu'elles indiquent l'heure courante.

La montre comprend en outre un organe de commande 7 pour commuter entre les modes horaire et altimètre. Cet organe de commande 7 peut être implémenté de multiples manières parmi lesquelles on mentionnera en particulier une tige couronne comme représentée, un bouton poussoir, une glace tactile ou encore par détection d'un choc sur la boîte au moyen d'un accéléromètre.

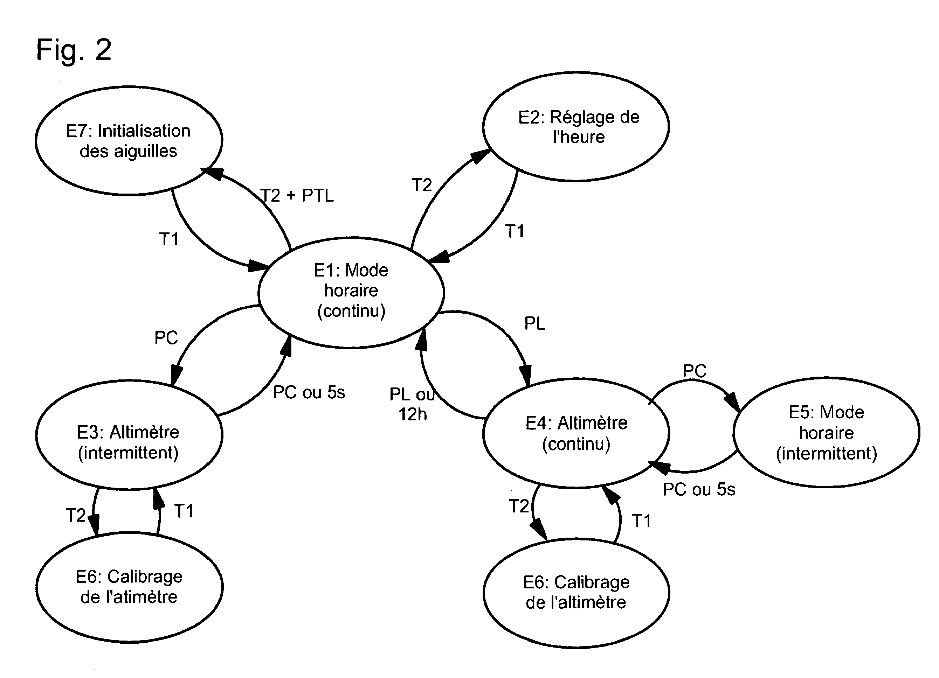

La figure 2 représente un diagramme d'état de l'actionnement des modes horaire et altimètre au moyen du ou des organes de commande de la montre. Pour des raisons de simplification de la description de cette figure 2, l'organe de commande considéré est une tige couronne, néanmoins des combinaisons d'autres organes de commande peut également être envisagées.

L'état courant E1 ou état initial, est le mode horaire dans lequel la montre fournit aux moyens des aiguilles une indication horaire à l'utilisateur, la tige couronne étant dans une première position non tirée T1. Depuis ce mode horaire, il est possible de manière classique de prévoir une deuxième position T2 tirée de la tige couronne dans laquelle l'utilisateur peut régler l'indication horaire en faisant tourner la tige couronne qui entraîne les aiguilles. Le mode réglage horaire de la montre correspondant à l'état E2 sur la figure. La montre retourne à l'état initial E1 ou mode horaire en repositionnant la tige couronne dans sa position non tirée T1. Toujours depuis l'état initial E1, i.e. mode horaire, une pression courte (PC) sur la tige couronne actionne un mode altimètre intermittent de la montre (état E3) dans lequel la montre fournit une indication d'altitude pendant un court laps de temps déterminé puis revient dans l'état E1 après l'écoulement de ce laps de temps ou suite à une nouvelle pression sur la tige couronne (PC ou 5s). A titre d'exemple, on entendra par pression courte, une pression inférieure à 2 secondes, et on fixera le court laps de temps avant retour dans le mode horaire à 5 secondes. Toujours en considérant la montre dans état initial E1 (mode horaire), une pression longue (PL) sur la tige couronne actionne un mode altimètre continu de la montre (état E4) dans lequel la montre fournit une indication d'altitude pendant un long laps de temps déterminé, très supérieur à celui du mode altimètre intermittent. La montre retourne dans le mode horaire (état E1) soit après l'écoulement de ce long laps de temps déterminé, soit suite à une nouvelle pression longue sur la tige couronne (PL ou 12h). A titre d'exemple, on entendra par pression longue, une pression d'une durée comprise entre 2 et 5 secondes, et on fixera le long laps de temps avant retour dans le mode horaire à 12 heures. Une pression courte (PC) sur la tige couronne depuis l'état E4 actionne un mode horaire intermittent (état E5) dans lequel la montre fournit une indication horaire pendant un court laps de temps, par exemple 5 secondes, ou jusqu'à une nouvelle pression courte (PC ou 5s) sur la tige couronne avant de retourner dans le mode altimètre continu (état E4). Depuis les modes altimètres intermittent (état E3) et continu (état E4), le positionnement de la tige couronne dans sa position tirée T2 permet d'entrer dans un mode de calibrage de l'altimètre (état E6) dans lequel il est possible de régler l'altitude afficher par rotation de la tige couronne. On notera encore qu'il est prévu de préférence la reconnaissance d'une pression très longue (PTL) sur la tige couronne depuis le mode horaire (état E1) pour entrer dans un mode d'initialisation des aiguilles (état E7) qui peuvent être réinitialisées en positionnant alors la tige couronne dans sa position tirée T2 puis par rotation de la tige couronne. Le retour dans le mode horaire s'effectue en repositionnant la tige couronne dans sa position non tirée T1.

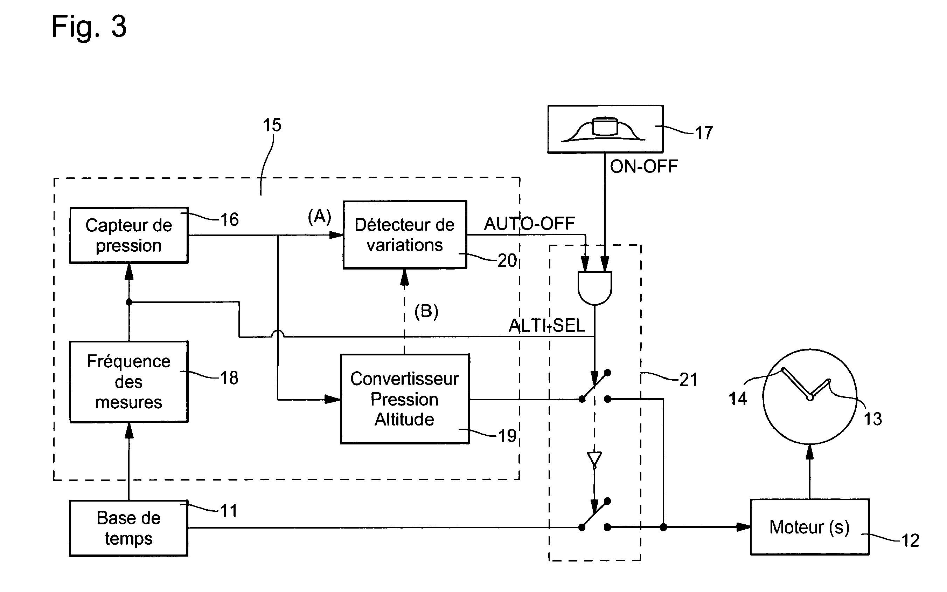

La figure 3 représente sous forme d'un schéma bloc, un exemple de circuit électronique de la montre altimètre selon un mode de réalisation de l'invention. Dans le mode horaire, la base de temps 11 de la montre commande l'avancement du ou des moteurs 12 entraînant les aiguilles 13 et 14 qui affichent alors une information horaire. L'actionnement d'un organe de commande 17 permet de commuter la montre depuis le mode horaire vers le mode altimètre ou inversement. Comme précédemment mentionné, tout type d'organe de commande peut être envisagé. Des moyens de sélection de mode 21 sont prévus pour sélectivement activer / désactiver le mode altimètre (ALTI_SEL) et le mode horaire. Ces moyens de sélection 21 sont ici simplement représentés sous la forme d'une porte logique placée en amont de deux commutateurs et un inverseur, mais tout autre dispositif électromécanique adéquat pourra être prévu par l'homme du métier. Lors du passage dans le mode altimètre, le module altimètre 15 est activé. Ce module altimètre 15 comprend un capteur de pression 16 qui permet de mesurer la pression extérieure ambiante, une unité d'échantillonnage de la fréquence des mesures de pression 18 à effectuer contrôler par la base de temps de la montre, un convertisseur pression-altitude 19 qui calcule des valeurs d'altitude sur la base des mesures de pression effectuées, et un détecteur de variations 20 qui permet de quitter le mode altimètre lorsque la variation de pression (chemin A), ou selon une alternative la variation d'altitude (chemin B), dépasse un seuil de variation déterminée. Le détecteur de variations 20 peut être implémenté, par exemple, sous la forme d'un soustracteur recevant soit deux valeurs de pression (chemin A), soit deux valeurs d'altitude (chemin B) suivi d'un comparateur avec un seuil de variation de pression (chemin A), respectivement d'altitude (chemin B). Plus généralement, le détecteur de variation 20 peut être implémenté sous la forme d'un circuit logique ou d'une équation logique programmée dans un microcontrôleur comparant l'évolution d'une fonction des mesures de pression effectuées entre deux intervalles de temps déterminés avec un seuil de variation déterminé homogène au résultat de cette fonction. Lorsque le résultat de la comparaison effectuée par le détecteur de variations 20 nécessite de sortir automatiquement du mode altimètre, ce dernier envoie alors un signal d'arrêt automatique (AUTO_OFF) en entrée de moyens de sélection de mode 21. Le signal ALTI_SEL est alors désactivé ce qui permet de sortir automatiquement du mode altimètre, de plus les moyens d'affichage analogiques sont alors commutés dans le mode horaire.

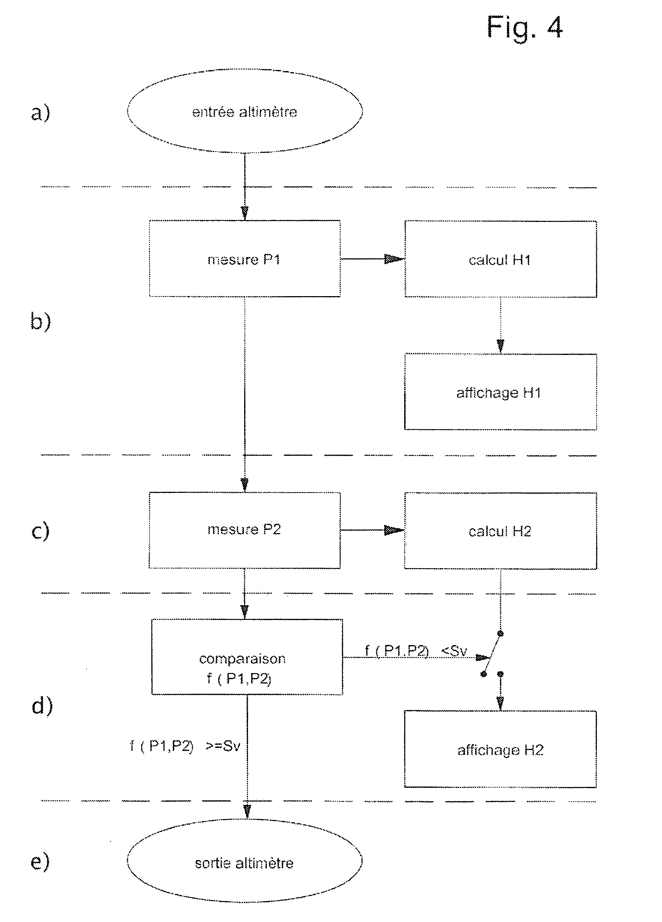

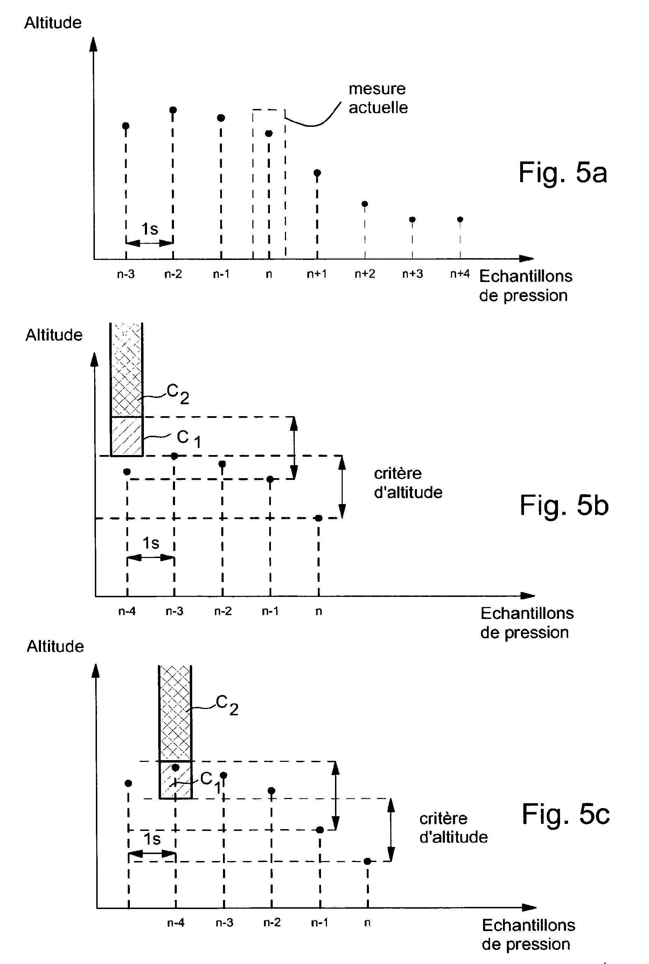

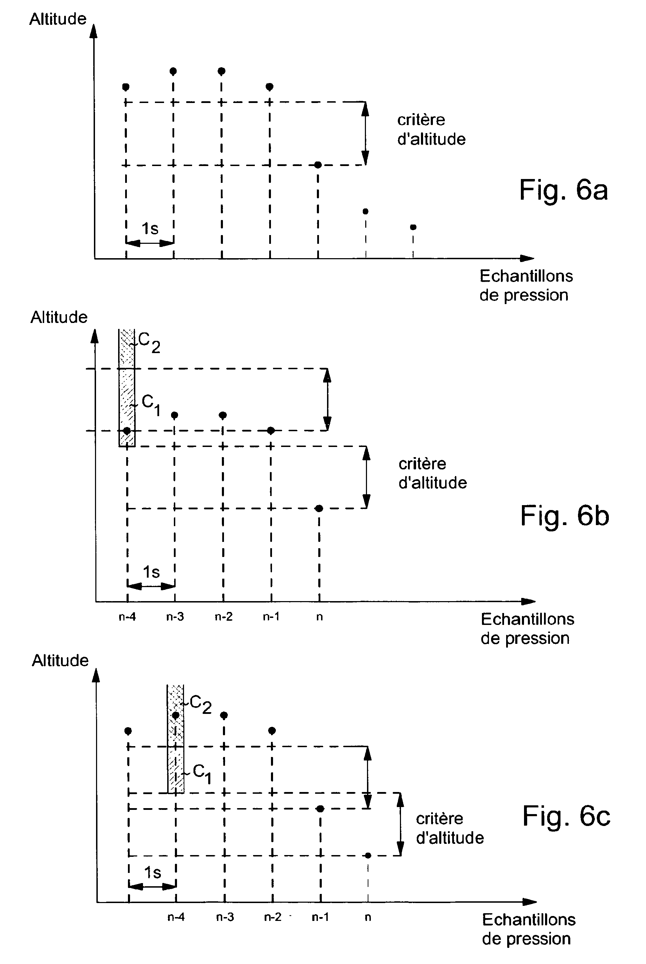

Le fonctionnement du module altimètre va maintenant être détaillé en relation avec une première méthode de sortie automatique du mode altimètre décrite en liaison avec la figure 4 et une deuxième méthode de sortie automatique du mode altimètre décrite en liaison avec les figures 5a-5d et 6a-6c.

La figure 4 représente une première méthode simplifiée de sortie automatique du mode altimètre. Dans cet exemple, la fréquence d'échantillonnage a été choisie à 1 Hertz, soit une mesure de pression par seconde. Pour le calcul des valeurs d'altitude par le convertisseur pression-altitude, la formule suivante pourra être utilisée:

$$H = 153.85 \times T_0 \times [1-(P/P_0)^{0.190255}] \qquad (1)$$

Dans laquelle, $T_0$ = 288.15 K = 15°C, P représente la pression barométrique ambiante et $P_0$ = 1013.25 mbar au niveau de la mer. L'équation ci-dessus est définie à un taux de variation de la température de -6.5°C/1000m, i.e. une réduction de la température de 6.5°C pour toute augmentation de 1000 mètres de l'altitude.

Lors de l'activation de l'organe de commande de la montre, cette dernière rentre dans le mode altimètre (étape a). Lors de l'entrée dans le mode altimètre, le module altimètre 15 est activé. L'unité d'échantillonnage de la fréquence des mesures 18, cadencée par la base de temps 11 de la montre, contrôlent le capteur de pression 16 de manière à ce que dernier effectue une mesure de pression à la fréquence souhaité, ici 1 Hz. A l'étape b), une première mesure de pression est effectuée, la valeur de pression P1 mesurée est fournie au convertisseur pression-altitude 19 qui calcule la valeur d'altitude H1 correspondante à la valeur de pression mesurée. La valeur d'altitude H1 calculée peut être alors affichée par les moyens analogiques d'affichage 13 et 14 d'une valeur d'altitude. A l'étape c), une deuxième mesure de pression est effectuée, la valeur de pression P2 mesurée est fournie au convertisseur pression-altitude 19 qui calcule une deuxième valeur d'altitude H2.

Selon l'alternative représentée par le chemin A à la figure 3, les deux valeurs de pression mesurées P1 et P2 sont fournies au détecteur de variations 20 qui compare (étape d) la différence de ces deux valeurs (P2-P1) avec un seuil déterminé de variation de pression ($S_{VP}$) au-delà duquel (P2-P1 $\geq S_{VP}$) on considère que l'altimètre n'est pas utilisé dans des conditions réalistes et une sortie automatique du mode altimètre est alors effectuée (étape e). Selon l'alternative représentée par le chemin B à la figure 3, les deux valeurs d'altitude H1 et H2 calculées sont fournies au détecteur de variations 20 qui compare la différence d'altitude (H1-H2) avec un seuil déterminé de variation d'altitude ($S_{VH}$) au-delà duquel (H1-H2 $\geq S_{VH}$) une sortie automatique du mode altimètre est effectuée (étape e). Dans les deux alternatives, il est prévu avantageusement de choisir un seuil de variation ($S_{VD}$, $S_{VH}$) supérieur à la valeur du seuil d'un homme en chute libre. Ainsi par exemple selon le chemin B, on choisira avantageusement $S_{VH}$ = 100 mètres pour une fréquence d'échantillonnage de 1 Hertz, soit un seuil correspondant à une vitesse de chute de 100m/s, ce qui est supérieure à la vitesse d'un homme en chute libre. Pour les cas où la variation de pression (P2-P1), respectivement d'altitude (H1-H2), est inférieure au seuil de variation de pression $S_{VD}$, respectivement d'altitude $S_{VH}$, l'altitude calculée H2 est affichée et une autre mesure de pression P3 est effectuée, une autre valeur d'altitude H3 correspondante est calculée et l'étape d) de comparaison est alors effectuée avec les deux dernières valeurs de pression P2 et P3 mesurées, respectivement avec les deux dernières valeurs d'altitude H2 et H3 calculées. On notera qu'alternativement il est également possible de comparer la valeur absolue de la variation de pression (chemin A), respectivement d'altitude (chemin B) avec le seuil de variation de pression, respectivement d'altitude.

A titre de variante de cette première méthode, il est possible de comparer des valeurs de pression ou d'altitude non consécutives. Avantageusement, on choisira de comparer deux valeurs d'altitude séparées de 3 secondes avec un seuil de variation d'altitude $S_{VH}$ fixé à 300 mètres.

Selon une autre variante, il est avantageusement prévu d'utiliser en plus un "filtre de pression", le capteur de pression contenant un buffer circulaire des trois dernières valeurs de pression mesurées permettant de définir une pression moyenne. Alternativement, un buffer circulaire des trois dernières valeurs d'altitudes calculées peut être utilisé.

Les figures 5a à 5d représentent une deuxième méthode préférée de sortie automatique du mode altimètre permettant de sortir en un maximum de trois secondes en cas de variations jugées excessives ou irréalistes de l'altitude. La figure 5a représente des échantillons de mesures de pression et les altitudes correspondantes calculées par le convertisseur pression-altitude. Dans cet exemple, la fréquence d'échantillonnage a également été choisie de préférence égale à 1 Hertz. Selon cette seconde méthode, il est avantageusement prévu d'utiliser un "filtre de pression" en ce sens que le capteur de pression contient un buffer circulaire contenant les trois dernières mesures de pression (n, n-1 et n-2), sur la base desquelles le capteur de pression transmet au convertisseur pression-altitude, une valeur moyenne de pression donnée par la formule suivante :

$$Pn = [n + (n-1) + (n-2)] / 3 \qquad\qquad (2)$$

Le convertisseur pression-altitude calcule alors sur la base de la formule (1) une altitude filtrée dépendant de la valeur moyenne des trois dernières mesures de pression selon la formule (2) donnée. L'utilisation de ce filtre de pression présente l'avantage, comme cela va être détaillé ci-après, de ne pas sortir automatiquement dès la première valeur de pression mesurée située au-delà d'un seuil déterminé. Alternativement, l'utilisation d'un "filtre d'altitude" moyennant l'altitude affichée par les 3 dernières altitudes calculées à partir de la formule (1) est envisageable.

La figure 5b représente un premier échantillon de mesure dit "non déclencheur", c'est-à-dire pour lequel la valeur d'altitude filtrée ne déclenche pas la sortie automatique du mode altimètre de la montre. Sur cette figure 5b, apparaissent les 5 échantillons de pression (n, n-1, n-2, n-3 et n-4) auxquelles correspondent les 5 altitudes filtrées (hn, hn-1, hn-2, hn-3 et hn-4) calculés sur la base des trois mesures de pression précédentes selon les formules (1) et (2).

Le détecteur de variations 20 a pour but de vérifier si le mode altimètre doit rester actif en fonction des variations d'altitude ou de pression détectées. En cas de variations trop importantes dans un laps de temps donné, le détecteur envoie un signal pour quitter automatiquement le mode altimètre.

Pour cela, il est prévu avantageusement de vérifier deux conditions pour chaque échantillon, c'est-à-dire toutes les secondes dans cet exemple. L'utilisation d'une double condition s'avère très avantageuse car elle évite des sorties intempestives du mode altimètre qui pourrait intervenir par exemple lorsque l'utilisateur se lave les mains, le capteur pouvant être alors brièvement exposé à un jet d'eau, ou encore si le capteur est exposé soudainement à un flux d'air important par exemple lorsque l'utilisateur conduit une motocyclette, ou passe la main à travers la fenêtre d'un véhicule roulant à vive allure.

La première condition, représentée par le rectangle ouvert c1, consiste à vérifier si la dernière valeur d'altitude hn calculée est inférieure à la valeur d'altitude hn-4 calculée quatre secondes auparavant à laquelle on soustrait un critère d'altitude défini. Ainsi, la première condition peut s'exprimer comme suit:

$$hn < (hn\text{-}4 - \text{"critère d'altitude"}) \qquad\qquad (c1)$$

La deuxième condition, représentée par le rectangle ouvert c2, consiste à vérifier si l'avant dernière valeur d'altitude hn-1 est inférieure à la valeur d'altitude hn-4 calculée trois secondes auparavant à laquelle on soustrait le critère d'altitude défini. Cette seconde condition peut s'exprimer comme suit:

$$hn\text{-}1 < (hn\text{-}4 - \text{"critère d'altitude"}) \qquad\qquad (c2)$$

Sachant que selon cette deuxième méthode l'on veut sortir du mode altimètre en trois secondes maximum à partir de la détection d'une variation excessive de l'altitude, le critère d'altitude est choisi plus grand que la variation d'altitude possible d'un homme en chute libre, par exemple lors d'un saut en parachute avant ouverture de ce dernier, pendant ce laps de trois secondes. Ce critère est choisi de préférence à 300 mètres. Ainsi l'on s'assure pour sortir automatiquement du mode altimètre d'une variation d'altitude minimum de 300 mètres en 3 secondes (condition c2). On notera encore que les deux conditions c1) et c2) comparent respectivement la dernière (hn) et la l'avant dernière (hn-1) valeurs d'altitude calculées avec une même valeur d'altitude (hn-4) calculée précédemment, ce qui permet d'éviter les sorties intempestives du mode altimètre, tout en permettant une détection efficace d'une utilisation inadaptée requérant la sortie du mode altimètre.

Sur la figure 5b, on s'aperçoit qu'aucune des deux conditions c1 et c2 n'est remplie, en effet, la valeur d'altitude hn-4 étant située à l'extérieur des deux rectangles c1 et c2, le critère d'altitude défini n'a donc pas été franchi.

La figure 5c représente le cas d'un échantillon intermédiaire où uniquement la première condition c1 est remplie. Dans l'exemple représenté, l'utilisateur de la montre est probablement rentré dans l'eau car la valeur dernière d'altitude hn correspondant au dernier échantillon de pression n effectué, est déjà nettement inférieure à la valeur d'altitude hn-1 précédente, anciennement la valeur d'altitude hn à la figure 5b. Toutefois, en raison du filtre de pression, la valeur obtenue ne satisfait pas à la deuxième condition c2. En effet, comme cela est clairement visible au moyen des rectangles c1 et c2, la valeur d'altitude hn-4 est située dans le rectangle c1 et donc la première condition est remplie, en revanche, cette même valeur d'altitude hn-4 est située en dehors du rectangle c2 et donc la deuxième condition n'est pas remplie. En conséquence, la montre reste dans le mode altimètre.

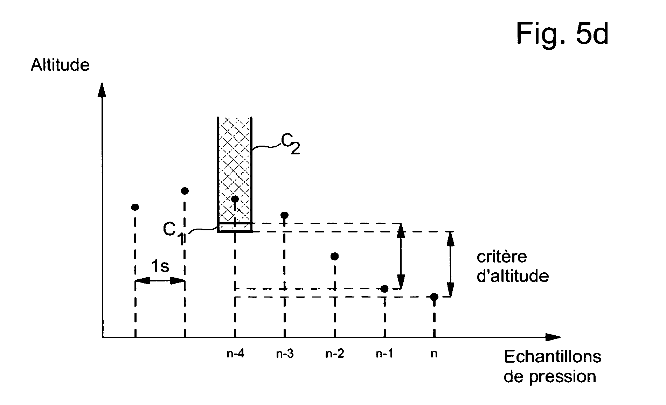

La figure 5d représente un échantillon pour lequel les deux conditions sont remplies ce qui entraîne la sortie du mode altimètre. Sur cette figure 5d, l'utilisateur est probablement encore sous l'eau, ainsi une deuxième valeur de pression correspondant à une variation d'altitude irréaliste est mesurée. Le filtre de pression prenant en compte les trois dernières mesures de pression, son effet filtrant est réduit avec deux valeurs de pression élevées sur trois. Une nouvelle fois, les rectangles c1 et c2 représentent les deux conditions à vérifier. Comme cela est visible, la valeur hn-4 est située non seulement dans le rectangle c1, mais également dans le rectangle c2. Ainsi, les deux conditions sont remplies, à savoir que l'altimètre à détecter une variation d'altitude supérieure à celle de la chute libre, supérieure à 300 mètres en 3 secondes dans l'exemple particulier représenté ici. En conséquence, le détecteur de variations envoie automatiquement un signal de sortie du mode altimètre en vue d'empêcher les aiguilles d'afficher des variations improbables qui dérouteraient l'utilisateur. Il s'est donc écoulé 3 secondes entre la première mesure irréaliste / excessive de pression et la sortie du mode altimètre.

Les figures 6a à 6c montrent toujours selon la deuxième méthode de sortie automatique, un exemple de sortie anticipée du à une détection de variation très brutale de la pression ou de l'altitude. La figure 6a représente le profil de l'altitude calculée en fonction des échantillons de pression effectués. La zone encadrée par des pointillés représente le moment où les mesures de pression changent brutalement. Une telle variation intervient par exemple en cas de plongeon dans l'eau par l'utilisateur, ou encore si la mesure qui précède la variation a été effectuée en surface et que la mesure suivante est elle effectuée à une certaine profondeur sous l'eau.

La figure 6b représente le premier échantillon après la brusque variation de pression. Les deux mêmes conditions c1 et c2 que précédemment sont utilisées. La première condition c1 est remplie, la valeur d'altitude hn-4 étant située dans le rectangle c1. La deuxième condition c2 n'est évidemment pas remplie sachant qu'elle ne tient pas encore compte de la dernière valeur d'altitude hn calculée.

La figure 6c représente l'analyse du second échantillon après la brusque variation de pression. La première condition reste remplie, une deuxième valeur d'altitude irréaliste ayant été calculée. De plus, cette fois la deuxième condition c2 est également remplie dans la mesure où la valeur d'altitude servant de référence est la valeur correspondant à l'échantillon précédent, soit la nouvelle valeur hn-1, anciennement la valeur d'altitude hn à la figure 6b. Les deux conditions c1 et c2 étant remplies, le détecteur de variations envoie un signal de sortie automatique du mode altimètre seulement deux secondes après que des valeurs d'altitude irréalistes aient été calculées.

On comprendra que diverses modifications et / ou améliorations évidentes pour l'homme du métier peuvent être apportées à la méthode de sortie du mode altimètre de l'invention ainsi qu'à la montre mettant en oeuvre cette méthode sus décrite sans sortir du cadre de l'invention défini par les revendications annexées. En particulier, concernant les moyens analogiques d'affichage, différentes variantes peuvent être envisagées parmi lesquelles, l'utilisation d'aiguilles autres que celles utilisées pour afficher l'heure, l'utilisation d'un disque gradué ou d'un compteur mécanique, l'altitude calculée apparaissant en regard d'une ouverture ou guichet pratiqué dans le cadran de la montre. Concernant, le filtre de pression, il est envisageable d'effectuer une moyenne glissante sur seulement deux valeurs de pression, ce qui présente l'avantage d'avoir une indication d'altitude plus réactive vis-à-vis de la pression mesurée, ou inversement d'effectuer une moyenne glissante sur quatre valeurs de pression, ce qui a pour effet de rendre les variations d'altitude moins brutales et pour effet de diminuer d'éventuels mouvements brusques des aiguilles lors de variations importantes de la pression mesurée. Toutefois, cette moyenne glissante ne devrait pas comporter plus de valeurs afin de ne pas complètement lisser la valeur d'altitude calculée, ce qui aurait pour effet d'empêcher de détecter un comportement inadapté de l'utilisateur dans le mode altimètre et donc une sortie automatique efficace de ce mode.

**Revendications**

1. Méthode pour sortir automatiquement du mode altimètre d'une montre électronique équipée d'un tel mode de fonctionnement comprenant les étapes suivantes:

   a) entrée dans le mode altimètre par activation du module altimètre de la montre;
   b) mesure au moyen d'un capteur de pression de la montre d'au moins une première valeur de pression (P1) utilisée pour le calcul d'une première valeur d'altitude (H1);
   c) mesure au moyen du capteur de pression d'au moins une deuxième valeur de pression (P2) utilisée pour le calcul d'une deuxième valeur d'altitude (H2);
   d) comparaison, au moyen d'un détecteur de variations du module altimètre, de la différence entre lesdites deuxième et première valeurs de pression (P2-P1) avec un seuil de variation de pression déterminé ($S_{vp}$) ou de la différence entre lesdites première et deuxième valeurs d'altitude (H1-H2) avec un seuil de variation d'altitude déterminé ($S_{VH}$);
   e) sortie automatique du mode altimètre lorsque ladite différence est supérieure audit seuil de variation déterminé correspondant, et arrêt de l'affichage des valeurs d'altitude par les moyens analogiques d'affichage.

2. Méthode selon la revendication 1, **caractérisée en ce que** le seuil de variation d'altitude déterminé ($S_{VH}$) est supérieure à la variation d'altitude mesurée dans un intervalle de temps prédéterminé d'un homme en chute libre.

3. Méthode selon la revendication 2, **caractérisée en ce que** les deux valeurs d'altitude considérées sont mesurées à un intervalle de 3 secondes et **en ce que** le seuil de variation d'altitude ($S_{VH}$) choisi est de 300 mètres.

4. Méthode selon l'une quelconque des revendications précédentes, **caractérisée en ce qu'**un filtre de pression est utilisé aux étapes b) et c), ces dernières consistant alors en:

   b) mesure au moyen du capteur de pression de la montre d'au moins deux premières valeurs de pression définissant une première valeur moyenne de pression (P1moy) utilisée pour le calcul d'une première valeur d'altitude (H1);
   c) mesure au moyen du capteur de pression d'au moins deux deuxièmes valeurs de pression définissant une deuxième valeur de pression moyenne (P2moy) utilisée pour le calcul d'une deuxième valeur d'altitude (H2).

**5.** Méthode selon la revendication 1, **caractérisée en ce que** les mesures de valeurs de.pression et calculs de valeurs d'altitude des étapes b) et c) sont répétés à une fréquence d'échantillonnage déterminée, **en ce que** l'étape d) consiste en les deux sous étapes suivantes:

d1) comparer la différence entre une valeur d'altitude (hn-4) calculée précédemment à l'avant-dernière valeur d'altitude (hn-1) et cette dernière (hn-1) avec un seuil de variation d'altitude déterminé ($S_{VH}$); et
d2) comparer la différence entre cette même valeur d'altitude (hn-4) calculée précédemment à l'avant dernière valeur d'altitude calculée et la dernière valeur d'altitude (hn) calculée avec le même seuil de variation d'altitude déterminé ($S_{VH}$);

et **en ce que** l'étape e) consiste à sortir automatiquement du mode altimètre lorsque le résultat des deux différences effectuées d1) et d2) est supérieur au seuil déterminé de variation d'altitude et arrêter l'affichage des valeurs d'altitude par les moyens analogiques d'affichage.

**6.** Méthode selon la revendication 5, **caractérisée en ce que** la valeur d'altitude calculée précédemment utilisée aux sous étapes d1) et d2) est la quatrième valeur d'altitude (hn-4) précédent la dernière valeur d'altitude calculée (hn) et **en ce que** le seuil de variation d'altitude est choisi égal à 300 métres.

**7.** Méthode selon la revendication 5 ou 6, **caractérisée en ce qu'**un filtre de pression est utilisé de sorte que le calcul de chaque valeur d'altitude est basé sur les au moins deux valeurs de pression (n, n-1, n2) précédemment mesurées, définissant une valeur moyenne de pression (Pn).

**8.** Méthode selon l'une quelconque des revendications précédentes, **caractérisée en ce que** lors de l'étape e) l'arrêt de l'affichage des valeurs d'altitude consiste en une commutation des moyens analogiques d'affichage dans un mode horaire.

**9.** Montre (1) électronique comprenant un capteur de pression (14), un module altimètre (15) calculant, dans un mode altimètre, des valeurs d'altitude à partir des valeurs de pression mesurées par ledit capteur de pression (14) et des moyens analogiques d'affichage (3, 4) pour afficher les valeurs d'altitude calculées, **caractérisée en ce que** ledit module altimètre (15) comprend un détecteur de variations (20) agencé pour comparer deux valeurs successives de pression ou d'altitude mesurées avec un seuil déterminé correspondant de variation de pression ou d'altitude, et comprenant en outre des moyens de sélection de mode (21) commandés uniquement par la sortie du détecteur de variations (20) agencés pour sortir automatiquement du mode altimètre et arrêter l'affichage des valeurs d'altitude par les moyens analogiques d'affichage (3,4) lorsque la valeur de la différence entre les deuxième et première valeurs mesurées de pression ($P_2$-$P_1$) est supérieure audit seuil déterminé de variation de pression ($S_{VP}$) ou lorsque la valeur de la différence entre les première et deuxième valeurs mesurées d'altitude ($H_1$-$H_2$) est supérieure audit seuil déterminé de variation d'altitude ($S_{VH}$).

**10.** Montre électronique selon la revendication 9, **caractérisée en ce que** le module altimètre comprend en outre un filtre de pression fournissant des valeurs de pression moyennées au détecteur de variations.

**11.** Montre électronique selon la revendication 9, **caractérisée en ce que** le module altimètre comprend en outre un filtre d'altitude fournissant des valeurs d'altitude moyennées au détecteur de variations.

**12.** Montre électronique selon l'une des revendications 9 à 11, **caractérisée en ce que** ledit détecteur de variations comprend un soustracteur recevant deux valeurs de pression ou, respectivement, d'altitude, et un comparateur entre le résultat fourni en sortie du soustracteur et un seuil de variation de pression ou, respectivement, d'altitude.

**Claims**

**1.** Method allowing an electronic watch fitted with an altimeter mode to automatically exit said mode including the following steps:

a) entry into altimeter mode by activating the watch altimeter module;
b) using a pressure sensor of the watch to measure at least one first pressure value (P1) used to calculate a first altitude value (H1);
c) using the pressure sensor to measure at least one second pressure value (P2) used to calculate a second altitude value (H2);

d) comparing the difference between said second and first pressure values (P2-P1) with a determined pressure variation threshold ($S_{VP}$) or the difference between said first and second altitude values (H1-H2) with a determined altitude variation threshold ($S_{VH}$) using a variation detector of the altimeter module;

e) automatic exit from the altimeter mode when said difference is higher than the corresponding determined variation threshold and stopping the display of altitude values by the analogue display means.

2. Method according to claim 1, **characterized in that** the determined altitude variation threshold ($S_{VP}$) is higher than the altitude variation of a man in freefall measured in a determined time interval.

3. Method according to claim 2, **characterized in that** the two altitude values considered are measured within a time interval of 3 seconds and **in that** the altitude variation threshold ($S_{VH}$) selected is 300 meters.

4. Method according to any of the preceding claims, **characterized in that** a pressure filter is used at steps b) and c), the latter consisting in:

b) using the pressure sensor of the watch to measure at least two first pressure values defining a first mean pressure value (P1 moy) used for calculating a first altitude value (H1);

c) using the pressure sensor to measure at least two second pressure values defining a second mean pressure value (P2moy) used for calculating a second altitude value (H2).

5. Method according to claim 1, **characterized in that** the pressure value measurements and altitude value calculations of steps b) and c) are repeated at a determined sampling frequency, **in that** step d) consists in the following two sub-steps:

d1) comparing the difference between a previously calculated altitude value (hn-4) to the penultimate altitude value (hn-1) and the latter (hn-1) to a determined altitude variation threshold ($S_{VH}$): and

d2) comparing the difference between said previously calculated altitude value (hn-4) to the penultimate calculated altitude value and the last calculated altitude value (hn) to the same determined altitude variation threshold;

and **in that** step e) consists in automatically exiting the altimeter mode when the result of the two differences carried out in sub-steps d1) and d2) is higher than the determined altitude variation threshold and stopping the display of altitude values by the analogue display means.

6. Method according to claim 5, **characterized in that** the previously calculated altitude value used in sub-steps d1) and d2) is the fourth altitude value (hn-4) preceding the last calculated altitude value (hn) and **in that** the altitude variation threshold is also selected to be 300 meters.

7. Method according to claim 5 or 6, **characterized in that** a pressure filter is used such that the calculation of each altitude value is based on the at least two previously measured pressure values (n, n-1, n2), defining a mean pressure value (pn).

8. Method according to any of the preceding claims, **characterized in that** during step e) stopping the altitude value display consists in switching the analogue display means into time mode.

9. Electronic watch (1) including a pressure sensor (14), an altimeter module (15) calculating, in altimeter mode, altitude values from pressure values measured by said pressure sensor (14) and analogue display means (3, 4) for displaying the calculated altitude values, **characterized in that** said altimeter module (15) includes a variation detector (20) arranged for comparing two succeeding pressure or altitude values measured with a determined corresponding pressure or altitude variation threshold, and further including mode selection means (21) controlled only by the variation detector (20) output, arranged for automatically exiting the altimeter mode and stopping the display of altitude values by the analogue display means (3, 4), when the value of the difference between the second and the first pressure values measured ($P_2 - P_1$) is higher than the determined pressure variation threshold ($S_{VP}$) or when the value of the difference between the first and the second altitude values measured ($H_1-H_2$) is higher than the determined altitude variation threshold.

10. Electronic watch according to claim 9, **characterized in that** the altimeter module further includes a pressure filter supplying mean pressure values to the variation detector.

**11.** Electronic watch according to claim 9, **characterized in that** the altimeter module further includes an altitude filter supplying mean altitude values to the variation detector.

**12.** Electronic watch according to any of claims 9 to 11, **characterised in that** said variation detector comprises a substracter receiving two pressure or, respectively, altitude values, and a comparator between the result provided at the output of the substracter and pressure or, respectively altitude, variation threshold.

**Patentansprüche**

**1.** Verfahren zum automatischen Verlassen des Höhenmessmodus einer elektronischen Uhr, die mit einem solchem Betriebmodus ausgestattet ist, umfassend die nachfolgenden Schritte:

a) Eintreten in den Höhenmessmodus durch Aktivierung des Höhenmessmoduls der Uhr;
b) Messen von zumindest einem ersten Druckwert (P1) mittels eines Druckfühlers der Uhr, welcher Wert zum Berechnen eines ersten Höhenwerts (H1) verwendet wird;
c) Messen von zumindest einem zweiten Druckwert (P2) mittels des Druckfühlers der Uhr, welcher Wert zum Berechnen eines zweiten Höhenwerts (H2) verwendet wird;
d) Vergleichen der Differenz zwischen dem ersten und dem zweiten Druckwert (P2-P1) mit einem bestimmten Druckänderungsschwellwert ($S_{VP}$) bzw. Vergleichen der Differenz zwischen dem ersten und dem zweiten Höhenwert (H1-H2) mit einem bestimmten Höhenänderungsschwellwert ($S_{VH}$) mittels eines Änderungsdetektors des Höhenmessmoduls;
e) automatisches Verlassen des Höhenmessmodus, wenn die Differenz höher als der entsprechende bestimmte Änderungsschwellwert ist, und Anhalten der Anzeige der Höhenwerte durch die analogen Anzeigemittel.

**2.** Verfahren nach Anspruch 1, **dadurch gekennzeichnet, dass** der bestimmte Höhenänderungsschwellwert ($S_{VH}$) höher als die in einem vorbestimmten Zeitintervall gemessene Höhenänderung einer im freien Fall befindlichen Person ist.

**3.** Verfahren nach Anspruch 2, **dadurch gekennzeichnet, dass** die beiden betrachteten Höhenwerte in einem Intervall von 3 Sekunden gemessen werden und dass der gewählte Höhenänderungsschwellwert ($S_{VH}$) 300 m beträgt.

**4.** Verfahren nach irgendeinem der vorangehenden Ansprüche, **dadurch gekennzeichnet, dass** ein Druckfilter bei den Schritten b) und c) Anwendung findet, wobei letztere dann darin bestehen,

b) mittels des Druckfühlers der Uhr zumindest zwei erste Druckwerte zu messen, die einen ersten mittleren Druckwert (P1 moy) definierten, der zum Berechnen eines ersten Höhenwertes (H1) verwendet wird;
c) mittels des Druckfühlers zumindest zwei zweite Druckwerte zu messen, die einen zweiten mittleren Druckwert (P2moy) definierten, der zum Berechnen eines zweiten Höhenwertes (H2) verwendet wird.

**5.** Verfahren nach Anspruch 1, **dadurch gekennzeichnet, dass** die Druckwertmessungen und Höhenwertberechnungen der Schritte b) und c) mit einer bestimmten Abtastfrequenz wiederholt werden und dass der Schritt d) aus den beiden nachfolgenden Unterschritten besteht.

d1) Vergleichen der Differenz zwischen einem Höhenwert (hn-4), der vor dem vorletzten Höhenwert (hn-1) berechnet wurde, und dem letztgenannten (hn-1) mit einem bestimmten Höhenänderungsschwellwert ($S_{VH}$); und
d2) Vergleichen der Differenz zwischen diesem gleichen Höhenwert (hn-4), der vor dem vorletzten berechneten Höhenwert berechnet wurde, und dem zuletzt berechneten Höhenwert (hn) mit dem gleichen bestimmten Höhenänderungsschwellwert ($S_{VH}$);

und dass der Schritt e) darin besteht, den Höhenmessmodus automatisch zu verlassen, wenn das Ergebnis der beiden erfolgten Differenzen d1) und d2) höher ist als der bestimmte Höhenänderungsschwellwert, und die Anzeige der Höhenwerte durch die analogen Anzeigemittel anzuhalten.

**6.** Verfahren nach Anspruch 5, **dadurch gekennzeichnet, dass** der zuvor berechtete Höhenwert, der bei den Unterschritten d1) und d2) verwendet wird, der viertletzte Höhenwert (hn-4) vor dem zuletzt berechneten Höhenwert (hn) ist und dass der Höhenänderungsschwellwert gleich 300 m gewählt ist.

7. Verfahren nach Anspruch 5 oder 6, **dadurch gekennzeichnet, dass** ein Druckfilter verwendet wird, so dass die Berechnung eines jeden Höhenwerts auf den zumindest zwei Druckwerten (n, n-1, n2) basiert, die zuvor gemessen wurden und einen mittleren Druckwert (Pn) definierten.

8. Verfahren nach irgendeinem der vorangehenden Ansprüche, **dadurch gekennzeichnet, dass** bei dem Schritt e) das Anhalten der Anzeige der Höhenwerte in einem Umschalten der analogen Anzeigemittel in einen Zeitmodus besteht.

9. Elektronische Uhr (1) mit einem Druckfühler (14), einem Höhenmessmodul (15), das in einem Höhenmessmodus Höhenwerte ausgehend von den von dem Druckfühler (14) gemessenen Druckwerten berechnet, und analogen Anzeigemitteln (3, 4), um die berechneten Höhenwerte anzuzeigen, **dadurch gekennzeichnet, dass** das Höhenmessmodul (15) einen Änderungsdetektor (20) enthält, der dazu vorgesehen ist, zwei aufeinanderfolgende Druck- bzw. Höhenmesswerte mit einem bestimmten entsprechenden Druck- oder Höhenänderungsschwellwert zu vergleichen, und ferner mit Modusauswahlmitteln (21), die nur über den Ausgang des Änderungsdetektors (20) angesteuert werden und dazu vorgesehen sind, automatisch den Höhenmessmodus zu verlassen und die Anzeige der Höhenwerte durch die analogen Anzeigemittel (3, 4) anzuhalten, wenn der Wert der Differenz zwischen dem zweiten und dem ersten Druckmesser ($P_2$-$P_1$) höher ist als der bestimmte Druckänderungsschwellwert ($S_{VP}$) oder wenn der Wert der Differenz zwischen dem ersten und dem zweiten Höhenmesswert ($H_1$-$H_2$) höher ist als der bestimmte Höhenänderungsschwellwert ($S_{VH}$).

10. Elektronische Uhr nach Anspruch 9, **dadurch gekennzeichnet, dass** das Höhenmessmodul ferner einen Druckfilter enthält, der für den Änderungsdetektor gemittelte Druckwerte bereitstellt.

11. Elektronische Uhr nach Anspruch 9, **dadurch gekennzeichnet, dass** das Höhenmessmodul ferner einen Höhenfilter enthält, der für den Änderungsdetektor gemittelte Höhenwerte bereitstellt.

12. Elektronische Uhr nach einem der Ansprüche 9 bis 11, **dadurch gekennzeichnet, dass** der Änderungsdetektor einen Substrahierer enthält, der zwei Druck- bzw. Höhenwerte empfängt, und einen Komparator zwischen dem Ergebnis, das am Ausgang des Substrahierers bereitgestellt wird, und einem Druck- bzw. Höhenänderungsschwellwert.

## Fig. 1

Fig. 2

E5: Mode horaire (intermittent)

E2: Réglage de l'heure

E4: Altimètre (continu)

E6: Calibrage de l'altimètre

E1: Mode horaire (continu)

E7: Initialisation des aiguilles

E3: Altimètre (intermittent)

E6: Calibrage de l'atimètre

PC

PC ou 5s

T1

PL

T1

T2

PL ou 12h

T2

T2 + PTL

T1

PC ou 5s

PC

T1

T2

# Fig. 3

EP 1 762 915 B1

Fig. 4

a)      ( entrée altimètre )

b)

| mesure P1 | → | calcul H1 |

| | affichage H1 |

c)     | mesure P2 | → | calcul H2 |

d)

| comparaison f ( P1,P2 ) |

f ( P1,P2 ) <Sv

| affichage H2 |

f ( P1,P2 ) >=Sv

e)     ( sortie altimètre )

15

Altitude

mesure
actuelle

Fig. 5a

1s

n-3    n-2    n-1    n    n+1    n+2    n+3    n+4    Echantillons
de pression

Altitude

$C_2$

$C_1$

critère
d'altitude

Fig. 5b

1s

n-4    n-3    n-2    n-1    n

Echantillons
de pression

Altitude

$C_2$

$C_1$

critère
d'altitude

Fig. 5c

1s

n-4    n-3    n-2    n-1    n

Echantillons
de pression

Fig. 5d

Altitude

critère
d'altitude

1s

$C_1$

$C_2$

n-4    n-3    n-2    n-1    n

Echantillons
de pression

Altitude

critère
d'altitude

## Fig. 6a

1s

Echantillons
de pression

Altitude

$C_2$

$C_1$

critère
d'altitude

## Fig. 6b

1s

n-4   n-3   n-2   n-1   n

Echantillons
de pression

Altitude

$C_2$

$C_1$

critère
d'altitude

## Fig. 6c

1s

n-4   n-3   n-2   n-1   n

Echantillons
de pression

**EP 1 762 915 B1**

**RÉFÉRENCES CITÉES DANS LA DESCRIPTION**

**Documents brevets cités dans la description**

- EP 1396766 A1
- EP 1571507 A